# EUROPEAN PATENT SPECIFICATION

(11) **EP 2 694 626 B1**
(45) Date of publication and mention of the grant of the patent: **13.06.2018**
(21) Application number: 12714187.7
(22) Date of filing: 04.04.2012
(51) Int. Cl.: C10K 3/00, C10J 3/72, C10J 3/84, C10K 1/02, C10J 3/86, C10K 1/04, F22B 1/18

(54) **PROCESS FOR GENERATING HIGH PRESSURE STEAM FROM A SYNGAS FERMENTATION PROCES**
VERFAHREN ZUR ERZEUGUNG VON HOCHDRUCKDAMPF AUS EINEM SYNGAS-FERMENTATIONSPROZESS
PROCÉDÉ DE GÉNÉRATION D'UNE VAPEUR À HAUTE PRESSION À PARTIR D'UN PROCÉDÉ DE FERMENTATION DE SYNGAS

(30) Priority: 06.04.2011 US 201161516646 P; 06.04.2011 US 201161516704 P; 06.04.2011 US 201161516667 P; 13.12.2011 US 201113324321
(43) Date of publication of application: 12.02.2014
(73) Proprietor: Ineos Bio SA, 1180 Rolle (CH)
(72) Inventor: BELL, Peter S, Fayetteville, Arkansas 72703 (US); OCFEMIA, Kim, Fayetteville, Arkansas 72704 (US); BERNSTEAD, Stephen John, Callander Perthshire FK17 8AS (GB); PARKER, Graeme, Falkirk Stirlingshire FK2 8LX (GB)
(74) Representative: Hartley, Andrew Philip
(86) International application number: PCT/US2012/032180
(87) International publication number: WO 2012/138766

(56) References cited:
- EP-A1- 1 918 352
- US-A- 4 238 403
- US-A- 4 823 741
- US-B2- 7 552 701

## Description

A process is provided for generating power from a syngas fermentation process. More specifically, a process is provided for generating high pressure steam from gasification and fermentation of syngas.

### BACKGROUND

Microorganisms can produce ethanol and other compounds from carbon monoxide (CO) through fermentation of gaseous substrates. The CO is often provided to the fermentation as part of a gaseous substrate in the form of a syngas. Gasification of carbonaceous materials to produce producer gas or synthesis gas or syngas that includes carbon monoxide and hydrogen is well known in the art. Typically, such a gasification process involves a partial oxidation or starved-air oxidation of carbonaceous material in which a sub-stoichiometric amount of oxygen is supplied to the gasification process to promote production of carbon monoxide.

Syngas produced by gasification processes described in the art can be hot and needs cooling prior to downstream processing and subsequent fermentation. Hot syngas comprising carbon monoxide generated in a gasification apparatus, is cooled in a heat exchanger or waste heat boiler downstream of the gasification apparatus, see for example US Patent No. 6,435,139; US Patent No. 7,587,995 and US Patent No. 7,552,701. US 4,823,741 describes a process for gasification of coal to synthesis gas including passing the hot synthesis gas to a quench zone comprising an indirect heat exchange zone, the heat transfer surfaces in contact with the synthesis gas at least partly being composed of boron nitride. Recovery and use of this heat content of hot syngas can be very important for process economics.

### SUMMARY

A process is provided for generating high pressure steam from a syngas fermentation process, the process comprising:
contacting hot syngas leaving a gasifier and having a temperature above 760°C (1400°F) with cooled syngas, having a temperature of 177°C (350°F) to 232°C (450°F) and wherein the recycled cooled syngas is blended with the hot syngas at a ratio of 0.1 to 20, to produce a pre-cooled syngas having a temperature of 760°C (1400°F) or less at an inlet of a waste heat boiler; and
transferring the pre-cooled syngas to the waste heat boiler effective for producing waste heat boiler high pressure steam and a cooled syngas, the waste heat boiler high pressure steam having a pressure of 345 kPag to 6.55 MPag (50 psig to 950 psig),
wherein a fermentor receives cooled syngas which is not recycled,
the process further comprising transferring lean syngas, wherein the lean syngas has a CO/CO2 ratio of less than about 1.0, from the fermentor to a vent gas burner effective for producing hot vent gas burner gas;
transferring the hot vent gas burner gas to a vent gas boiler superheater effective for producing vent gas boiler high pressure steam, wherein the vent gas boiler high pressure steam has a pressure of 4.14 MPag to 6.55 MPag (600 psig to 950 psig); and
combining the waste heat boiler high pressure steam and vent gas boiler high pressure steam to form a combined high pressure steam, wherein the combined high pressure steam has a pressure of 4.14 MPag to 6.55 MPag (600 psig to 950 psig).

A system is disclosed for generating high pressure steam from a syngas fermentation process. The system includes a waste heat boiler positioned to receive syngas having a temperature of 760°C (1400°F) or less. The waste heat boiler effective for producing waste heat boiler high pressure steam and cooled syngas. A vent gas burner receives lean syngas from a fermentor and the vent gas burner is effective for producing hot vent gas burner gas. A vent gas boiler superheater receives the hot vent gas burner gas and the vent gas boiler superheater is effective for producing vent gas boiler high pressure steam. A steam mixer receives and mixes the waste heat boiler high pressure steam and the vent gas boiler high pressure steam to produce a combined high pressure steam.

### BRIEF DESCRIPTION OF FIGURES

The above and other aspects, features and advantages of several aspects of the process will be more apparent from the following drawings.
Figure 1 is a general overview of a system that includes a waste heat boiler and vent gas boiler.
Figure 2A and Figure 2B illustrate an alterative aspect of a waste heat boiler system.
Figure 3 illustrates an alternative aspect of a vent gas boiler system.
Figure 4 is a general overview of another aspect of a system that includes a waste heat boiler and vent gas boiler.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various aspects of the present process and apparatus. Also, common but well-understood elements that are useful or necessary in commercially feasible aspects are often not depicted in order to facilitate a less obstructed view of these various aspects.

### DETAILED DESCRIPTION

The following description is not to be taken in a limiting sense, but is made merely for the purpose of describing the general principles of exemplary embodiments. The scope of the invention should be determined with reference to the claims.

The process described herein effectively converts heat generated during gasification and fermentation of syngas into high pressure steam for generation of electrical power. The methods provide an excess of electrical power over what is needed for the overall system.

### Definitions

Unless otherwise defined, the following terms as used throughout this specification for the present disclosure are defined as follows and can include either the singular or plural forms of definitions below defined:
The term "about" modifying any amount refers to the variation in that amount encountered in real world conditions, e.g., in the lab, pilot plant, or production facility. For example, an amount of an ingredient or measurement employed in a mixture or quantity when modified by "about" includes the variation and degree of care typically employed in measuring in an experimental condition in production plant or lab. For example, the amount of a component of a product when modified by "about" includes the variation between batches in a multiple experiments in the plant or lab and the variation inherent in the analytical method. Whether or not modified by "about," the amounts include equivalents to those amounts. Any quantity stated herein and modified by "about" can also be employed in the present disclosure as the amount not modified by "about".

"Carbonaceous material" as used herein refers to carbon rich material such as coal, and petrochemicals. However, in this specification, carbonaceous material includes any carbon material whether in solid, liquid, gas, or plasma state. Among the numerous items that can be considered carbonaceous material, the present disclosure contemplates: carbonaceous material, carbonaceous liquid product, carbonaceous industrial liquid recycle, carbonaceous municipal solid waste (MSW or msw), carbonaceous urban waste, carbonaceous agricultural material, carbonaceous forestry material, carbonaceous wood waste, carbonaceous construction material, carbonaceous vegetative material, carbonaceous industrial waste, carbonaceous fermentation waste, carbonaceous petrochemical co products, carbonaceous alcohol production co-products, carbonaceous coal, tires, plastics, waste plastic, coke oven tar, fibersoft, lignin, black liquor, polymers, waste polymers, polyethylene terephthalate (PETA), polystyrene (PS), sewage sludge, animal waste, crop residues, energy crops, forest processing residues, wood processing residues, livestock wastes, poultry wastes, food processing residues, fermentative process wastes, ethanol co-products, spent grain, spent microorganisms, or their combinations.

The term "fibersoft" or "Fibersoft" or "fibrosoft" or "fibrousoft" means a type of carbonaceous material that is produced as a result of softening and concentration of various substances; in an example carbonaceous material is produced via steam autoclaving of various substances. In another example, the fibersoft can include steam autoclaving of municipal, industrial, commercial, and medical waste resulting in a fibrous mushy material.

The term "municipal solid waste" or "MSW" or "msw" means waste that may include household, commercial, industrial and/or residual waste.

The term "syngas" or "synthesis gas" means synthesis gas which is the name given to a gas mixture that contains varying amounts of carbon monoxide and hydrogen. Examples of production methods include steam reforming of natural gas or hydrocarbons to produce hydrogen, the gasification of coal and in some types of waste-to-energy gasification facilities. The name comes from their use as intermediates in creating synthetic natural gas (SNG) and for producing ammonia or methanol. Syngas is combustible and is often used as a fuel source or as an intermediate for the production of other chemicals.

In one aspect, gasification of carbonaceous materials provides syngas. Gasification involves partial combustion of biomass in a restricted supply of oxygen. The resultant gas includes CO and H₂. In this aspect, syngas will contain at least about 20 mole % CO, in one aspect, about 20 to about 100 mole % CO, in another aspect, about 30 to about 90 mole % CO, in another aspect, about 40 to about 80 mole % CO, and in another aspect, about 50 to about 70 mole % CO. The syngas will have a CO/CO₂ molar ratio of at least about 0.75. Serial Numbers 61/516,667, 61/516,704 and 61/516,646 describe some examples of suitable gasification methods and apparatus (U.S Serial Numbers 61/516,667, 61/516,704 and 61/516,646, all of which were filed on April 6, 2011). Syngas leaving the gasifier will have a temperature above about 760°C (1400°F), and in another aspect, at least about 760°C to about 1927°C (about 1400°F to about 3500°F). The gasification process is effective for destruction of tars.

The terms "fermentation", fermentation process" or "fermentation reaction" and the like are intended to encompass both the growth phase and product biosynthesis phase of the process. In one aspect, fermentation refers to conversion of CO to alcohol.

### High Pressure Steam System

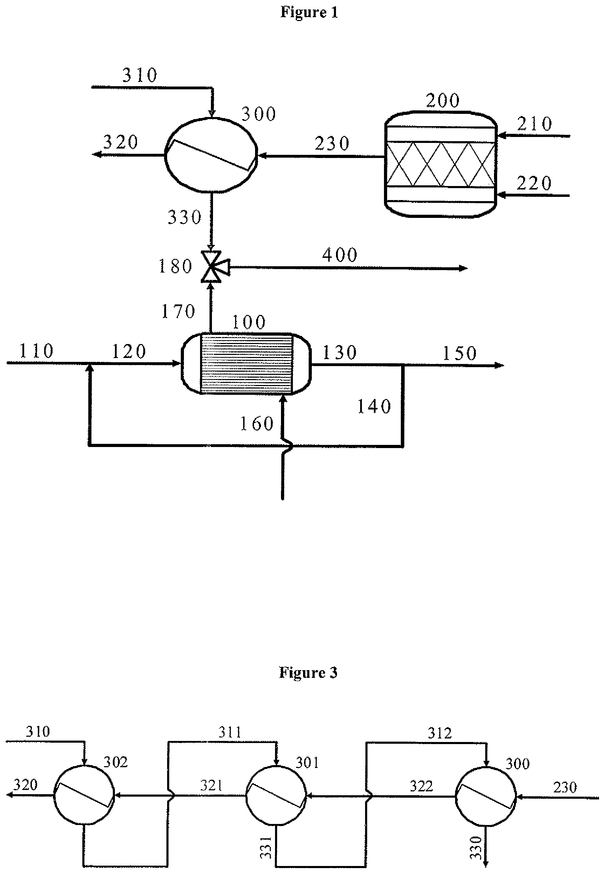

Figure 1 illustrates a system for generating high pressure steam. As shown in Figure 1, the process provides a blended sygnas 120 by blending hot syngas 110 leaving a gasifier (not shown) with recycled cooled syngas. Recycled cooled syngas 140 contacts hot syngas 110 after leaving the gasifier. The recycled cooled syngas 140 contacts the hot syngas 110 at a point after the hot syngas leaves the gasifier and before the blended syngas 120 enters the waste heat boiler 100. In this aspect, the recycled cooled syngas 140 has a temperature of about 177°C to about 232°C (about 350°F to about 450°F). A conduit or pipe transfers the recycled cooled syngas 140 to the hot syngas 110. Transfer of the recycled cooled sygnas 140 provides a ratio of recycled cooled syngas 140 to hot syngas of about 0.1 to about 20. In other aspect, ratios of recycled cooled syngas to hot syngas may include about 1 to about 15, about 1 to about 10, about 1 to about 5, about 1 to about 4, about 1 to about 3, about 1 to about 2, and about 1 to about 1.

The blended syngas 120 has an average temperature of about 760°C (1400°F) or less, in another aspect, about 316°C to about 760°C (about 600°F to about 1400°F), in another aspect, about 399°C to about 760°C (about 750°F to about 1400°F), in another aspect, about 399°C to about 649°C (about 750°F to about 1200°F), in another aspect, about 399°C to about 482°C (about 750°F to about 900°F), in another aspect, about 399°C to about 441 °C (about 750°F to about 825°F), and in another aspect, about 316°C to about 482°C (about 600°F to about 900°F). The blended syngas 120 reaches these temperatures prior to entering the waste heat boiler 100. In this aspect, a thermal couple measures temperature at an inlet to the waste heat boiler prior to entering the waste heat boiler 100. The thermal couple may be positioned at any position across a diameter of the inlet.

As used herein, "average temperature" refers to known methods utilized to determine multiple temperatures across a diameter and then express those multiple temperature measurements as an average. In one aspect, computer modeling may be used to provide an average temperature. In other aspects, multiple temperatures may be made using thermocouples equipped for such measurements, infrared sensing and the like.

As further shown in Figure 1, the process and system provides blended syngas 120 to a waste heat boiler 100. The waste heat boiler 100 may be any know type of waste heat boiler effective for providing heat transfer from the blended syngas 120. In this aspect, the waste heat boiler 100 receives water/steam 160 and the waste heat boiler is effective for providing cooled sygnas 130 and waste heat boiler high pressure steam 170. In this aspect, the waste heat boiler high pressure steam 170 has a pressure of about 345 kPag to 6.55 MPag (about 50 psig to about 950 psig). The process and system includes recycling 140 a portion of the cooled syngas 130 from the waste heat boiler 100 to the hot syngas 110. A fermentor receives cooled syngas 130 that is not recycled 150.

A vent gas burner 200 receives lean syngas 210 from a fermentor. The lean syngas 210 will have a CO/CO2 ratio of less than about 1.0, in another aspect, about 0.01 to about 1.0, in another aspect, about 0.01 to about 0.5, and in another aspect, about 0.01 to about 0.1. The lean syngas may have higher concentrations of CO in the event of lower CO conversions in the fermentor. In this aspect, the lean syngas 210 or off gas may have a CO/CO₂ molar ratio of more than about 0.1. The vent gas burner 200 burns the lean syngas 210. Transfer of air 220 to the vent gas burner 200 may enhance combustion. Vent gas burners 200 may include any of those known in the art. The vent gas burner 200 provides a hot vent gas burner gas 230. In this aspect, the vent gas burner gas has a temperature of about 816°C (1500°F) to about 1649°C (3000°F).

A vent gas boiler superheater 300 receives hot vent gas burner gas 230. Vent gas boiler superheaters may include any of those known in the art. The vent gas boiler superheater 300 receives water/steam 310 and the vent gas boiler superheater 300 provides a cooled vent gas boiler gas 320 and vent gas boiler high pressure steam 330. In this aspect, the vent gas boiler high pressure steam 330 has a pressure of about 4.14 MPag to about 6.55 MPag (about 600 psig to about 950 psig), and in another aspect, about 6.03 MPag to about 6.38 MPag (about 875 psig to about 925 psig). The vent gas boiler high pressure steam 330 and the waste heat boiler high pressure steam 170 are combined in a steam blender 180. The steam blender 180 provides a combined high pressure steam 400 having a pressure of about 4.14 MPag to about 6.55 MPag (about 600 psig to about 950 psig), and in another aspect, about 6.03 MPag to about 6.38 MPag (about 875 psig to about 925 psig). The combined high pressure steam 400 is utilized for production of power. Examples of equipment which may be utilized to produce power from high pressure steam include those known in the art, for example, steam turbines. In this aspect, increasing steam pressure from about 4.14 MPag to about 6.21 MPag (about 600 psig to about 900 psig) will result in a net power gain. The system may include steam drums (not shown) between the waste heat boiler 100 and steam blender 180, and between the vent gas boiler superheater 300 and steam blender 180.

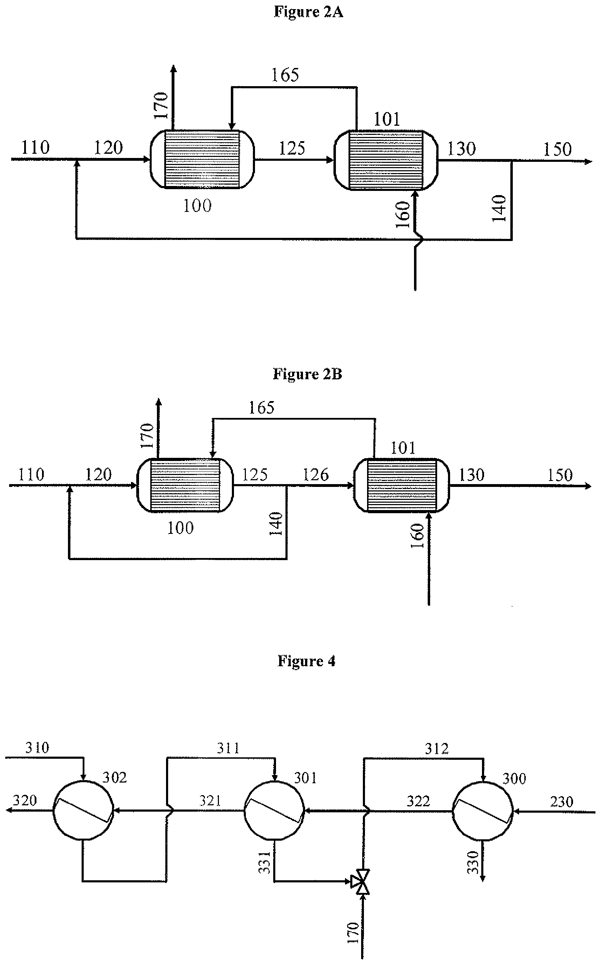

An alternative configuration of a waste heat boiler is shown in Figure 2A. This configuration includes both a waste heat boiler 100 and a waste heat boiler preheater 101 (also referred to as an economizer). As shown in Figure 2A, the process and system provide a blended syngas 120 by blending hot syngas 110 leaving a gasifier (not shown) with recycled cooled syngas 140. As described herein, gasification of carbonaceous materials may provide sygnas. Syngas will contain at least about 20 mole % CO, and will have a temperature above about 760°C (about 1400°F). The waste heat boiler 100 provides a semicooled syngas 125. In this aspect, the semicooled syngas 125 has a temperature of about 260°C to about 399°C (about 500°F to about 750°F).

A waste heat boiler preheater 101 receives the semicooled syngas 125. The waste heat boiler preheater 101 receives water/steam 160 and provides cooled syngas 130 and preheated water/steam 165. The process includes recycling 140 a portion of the cooled syngas 130 from the waste heat boiler preheater 101 to the hot syngas 110. A fermentor receives cooled syngas 130 that is not recycled 150. The waste heat boiler 100 receives the preheated water/steam 165 from the waste heat boiler preheater 101. The waste heat boiler 100 is effective for providing cooled sygnas 130 and waste heat boiler high pressure steam 170. In another aspect as shown in Figure 2B, the process includes recycling a portion of the semicooled syngas 125 from the waste heat boiler 100 to the hot syngas 110. The waste heat boiler preheater 101 receives a portion of the semicooled sygnas that is not recycled 126. In another aspect, the configuration s shown in Figures 2A and 2B may include steam drums (not shown). A steam drum may be positioned to receive preheated water/steam 165.

Figure 3 illustrates an alternative configuration of a vent gas boiler superheater system. A vent gas boiler superheater 300 receives hot vent gas burner gas 230. The vent gas boiler superheater 300 receives preheated steam 312 and provides vent gas boiler high pressure steam 330 and semicooled vent gas boiler gas 322. In this aspect, vent gas boiler high pressure steam 330 has a pressure of about 4.14 MPag to about 6.55 MPag (about 600 psig to about 950 psig), and the semicooled vent gas boiler gas 322 has a temperature of from about 1093°C to about 1371°C (about 2000°F to about 2500°F). In one aspect, a vent gas boiler steam generator 301 receives the semicooled vent gas boiler gas 322. The vent gas boiler steam generator 301 receives preheated water/steam 311 and provides preheated steam 312 and semicooled vent gas boiler gas 321. In another aspect, a vent gas boiler feed water preheater 302 receives the semicooled vent gas boiler gas 321. The vent gas boiler feed water preheater 302 receives water/steam 310 and provides preheated water/steam 311 and cooled vent gas boiler gas 320. In another aspect, the configuration shown in Figure 3 may include a steam drum (not shown) positioned to receive preheated steam 331 and may provide water/steam 310.

Figure 4 illustrates a system for generating high pressure steam. As shown in Figure 4, a vent gas boiler superheater 300 receives hot vent gas burner gas 230. The vent gas boiler superheater 300 receives preheated steam 312 and provides vent gas boiler high pressure steam 330 and semicooled vent gas boiler gas 322. In this aspect, the preheated steam 312 is provided by blending waste heat boiler high pressure steam 170 with preheated steam 331 from the vent gas boiler steam generator. The resulting vent gas boiler high pressure steam 330 has a pressure of about 4.14 MPag to about 6.55 MPag (about 600 psig to about 950 psig). The configuration shown in Figure 4 may also include a steam drum (not shown) positioned to receive preheated steam 331.

In one aspect, the vent gas burner gas has a temperature of about 816°C to about 1649°C (about 1500°F to about 3000°F). The vent gas boiler superheater 300 also receives waste heat boiler high pressure steam 170. The vent gas boiler superheater 300 receives water/steam 310 and the vent gas boiler superheater 300 provides a cooled vent gas boiler gas 320 and a combined high pressure steam 400 having a pressure of about 4.14 MPag to about 6.55 MPag (about 600 psig to about 950 psig). The combined high pressure steam 400 is utilized for production of power. In this aspect, mixing waste heat boiler steam with vent gas boiler steam prior to superheating instead of mixing the waste heat boiler steam after the vent boiler steam is already superheated will result in a net power gain.

### EXAMPLES

### Example 1: Effect of Syngas Cooler Inlet Temperature on Heat Transfer and Fouling

A gasifier having the design described herein was operated with the temperatures and flow rates described below. A fouling factor was determined as indicated.

Fouling factor at 600°F (316°C) inlet temperature to the syngas cooler:

| Accumulated Time (hrs) | Temperature of Syngas at Inlet of Syngas Cooler °F (°C) | Syngas Feed Rate to Cooler lb/hr (kg/hr) | Fouling Factor Btu/(ft²h°F) (W/(m²°C)) | Fouling Factor |
|---|---|---|---|---|
| 7.7 | 601 (316) | 477 (216) | 0.022 (0.125) | 45 |
| 15.7 | 614 (323) | 512 (232) | 0.034 (0.193) | 29 |
| 23.7 | 597 (314) | 862 (391) | 0.009 (0.051) | 115 |
| 31.7 | 608 (320) | 730 (331) | 0.008 (0.045) | 132 |
| 40 | 605 (318) | 1647 (747) | 0.002 (0.011) | 444 |
| 56 | 597 (314) | 432 (196) | 0.023 (0.131) | 43 |
| 64.7 | 593 (312) | 705 (320) | 0.011 (0.062) | 92 |
| 72 | 577 (303) | 618 (280) | 0.014 (0.079) | 70 |
| 80 | 595 (313) | 596 (270) | 0.019 (0.108) | 52 |
| 89 | 577 (303) | 1416 (642) | 0.007 (0.040) | 149 |
| 188.15 | 583 (306) | 355 (161) | 0.006 (0.034) | 164 |
| 196 | 572 (300) | 372 (169) | 0.024 (0.136) | 41 |
| 207.7 | 565 (296) | 345 (156) | 0.048 (0.273) | 21 |
| 216 | 577 (303) | 317 (144) | 0.034 (0.193) | 29 |
| 223.7 | 572 (300) | 385 (175) | 0.024 (0.136) | 41 |

Average fouling factor at 600°F (316°C) inlet was 0.019 Btu/(ft²h°F) (0.108 W/(m²°C)).

A gasifier having the design described herein was operated with lower syngas cooler inlet temperatures and flow rates described below. A fouling factor was determined as indicated.

Fouling factor at 1300°F (704°C) inlet temperature to the syngas cooler:

| Accumulated Time (hrs) | Temperature of Syngas at Inlet of Syngas Cooler °F (°C) | Syngas Feed Rate to Cooler lb/hr (hg/hr)) | Fouling Factor Btu/(ft²h°F) (W/(m²°C)) | Fouling Factor |
|---|---|---|---|---|
| 7.5 | 1297 (703) | 288 (131) | 0.042 (0.238) | 23.6 |
| 19.5 | 1293 (701) | 314 (142) | 0.070 (0.397) | 14.3 |
| 105.5 | 1295 (702) | 215 (98) | 0.119 (0.676) | 8.4 |
| 118.5 | 1295 (702) | 230 (104) | 0.100 (0.568) | 10 |
| 129.5 | 1294 (701) | 194 (88) | 0.123 (0.698) | 8.1 |
| 153.5 | 1297 (703) | 191 (87) | 0.098 (0.556) | 10.2 |
| 166.5 | 1295 (702) | 198 (90) | 0.096 (0.545) | 10.4 |
| 177.5 | 1295 (702) | 233 (106) | 0.072 (0.409) | 13.8 |
| 190.5 | 1297 (703) | 209 (95) | 0.099 (0.562) | 10.1 |
| 260.5 | 1308 (709) | 240 (109) | 0.050 (0.284) | 20.2 |
| 273.5 | 1302 (706) | 214 (97) | 0.067 (0.380) | 14.9 |
| 285.5 | 1301 (705) | 183 (83) | 0.082 (0.466) | 12.2 |
| 298.5 | 1295 (702) | 229 (104) | 0.078 (0.443) | 12.8 |
| 309.5 | 1296 (702) | 264 (120) | 0.080 (0.454) | 12.5 |
| 317 | 1314 (712) | 240 (109) | 0.097 (0.551) | 10.3 |
| 326.5 | 1328 (720) | 275 (125) | 0.078 (0.443) | 12.8 |
| 338.83 | 1322 (717) | 291 (132) | 0.068 (0.386) | 14.8 |
| 346.5 | 1332 (722) | 281 (127) | 0.070 (0.397) | 14.3 |
| 350.5 | 1346 (730) | 312 (142) | 0.071 (0.403) | 14 |
| 368.5 | 1336 (724) | 213 (97) | 0.081 (0.460) | 12.3 |
| 374.5 | 1335 (724) | 263 (119) | 0.074 (0.420) | 13.6 |

Average fouling factor at 1300°F (704°C) inlet was 0.078 Btu/(ft²h°F) (0.443 W/(m²°C)).

While the invention herein disclosed has been described by means of specific embodiments, examples and applications thereof, numerous modifications and variations could be made thereto by those skilled in the art without departing from the scope of the invention set forth in the claims.

## Claims

1. A process for generating high pressure steam from a syngas fermentation process, the process comprising:
contacting hot syngas leaving a gasifier and having a temperature above 760°C (1400°F) with cooled syngas, having a temperature of 177°C (350°F) to 232°C (450°F) and wherein the recycled cooled syngas is blended with the hot syngas at a ratio of 0.1 to 20, to produce a pre-cooled syngas having a temperature of 760°C (1400°F) or less at an inlet of a waste heat boiler; and
transferring the pre-cooled syngas to the waste heat boiler effective for producing waste heat boiler high pressure steam and a cooled syngas, the waste heat boiler high pressure steam having a pressure of 345 kPag to 6.55 MPag (50 psig to 950 psig),
wherein a fermentor receives cooled syngas which is not recycled,
the process further comprising transferring lean syngas, wherein the lean syngas has a CO/CO2 ratio of less than 1.0, from the fermentor to a vent gas burner effective for producing hot vent gas burner gas;
transferring the hot vent gas burner gas to a vent gas boiler superheater effective for producing vent gas boiler high pressure steam, wherein the vent gas boiler high pressure steam has a pressure of 4.14 MPag to 6.55 MPag (600 psig to 950 psig); and
combining the waste heat boiler high pressure steam and vent gas boiler high pressure steam to form a combined high pressure steam, wherein the combined high pressure steam has a pressure of 4.14 MPag to 6.55 MPag (600 psig to 950 psig).

2. The process of claim 1 wherein the pre-cooled syngas has a temperature of 316°C (600°F) to 760°C (1400°F).

3. The process of claim 2 wherein the pre-cooled syngas has a temperature of 316°C (600°F) to 482°C (900°F).

4. The process of claim 1 wherein the vent gas burner gas has a temperature of 816°C to 1649°C (1500°F to 3000°F).

5. The process of claim 1 wherein preheated water and/or steam is supplied to the waste heat boiler from a waste heat boiler preheater.

6. The process of claim 1 wherein the combined high pressure steam is utilized for production of power.

## Patentansprüche

1. Prozess zur Erzeugung von Hochdruckdampf aus einem Syngas-Fermentierungsprozess, wobei der Prozess umfasst:
Inkontaktbringen von heißem Syngas, das eine Vergasungseinheit verlässt und eine Temperatur von über 760 °C (1400 °F) hat, mit gekühltem Syngas mit einer Temperatur von 177 °C (350 °F) bis 232 °C (450 °F), und wobei das wiederaufbereitete gekühlte Syngas mit dem heißen Syngas mit einem Verhältnis von 0,1 bis 20 gemischt wird, um ein vorgekühltes Syngas mit einer Temperatur von 760 °C (1400 °F) oder weniger an einem Einlass eines Abwärmeboilers zu erzeugen; und
Übertragen des vorgekühlten Syngases zu dem Abwärmeboiler, der zur Erzeugung von Abwärmeboiler-Hochdruckdampf und eines gekühlten Syngases dient, wobei der Abwärmeboiler-Hochdruckdampf einen Druck von 345 kPag bis 6,55 MPag (50 psig bis 950 psig) hat,
wobei eine Fermentiereinrichtung gekühltes Syngas, das nicht wiederaufbereitet wird, empfängt,
wobei der Prozess ferner umfasst: Übertragen von Mager-Syngas, wobei das Mager-Syngas ein CO/CO₂-Verhältnis von kleiner als 1,0 hat, von der Fermentiereinrichtung zu einem Abgasbrenner, der heißes Abgasbrenner-Gas erzeugt;
Übertragen des heißen Abgasbrenner-Gases zu einem Abgas-Boiler-Überhitzer, der zur Erzeugung von Abgasboiler-Hochdruckdampf dient, wobei der Abgasboiler-Hochdruckdampf einen Druck von 4,14 MPag bis 6,55 MPag (600 psig bis 950 psig) hat; und
Zusammenführen des Abwärmeboiler-Hochdruckdampfes und des Abgasboiler-Hochdruckdampfes zur Erzeugung eines kombinierten Hochdruckdampfs, wobei der kombinierte Hochdruckdampf einen Druck von 4,14 MPag bis 6,55 MPag (600 psig bis 950 psig) hat.

2. Prozess nach Anspruch 1, wobei das vorgekühlte Syngas eine Temperatur von 316 °C (600 °F) bis 760 °C (1400 °F) hat.

3. Prozess nach Anspruch 2, wobei das vorgekühlte Syngas eine Temperatur von 316 °C (600 °F) bis 482 °C (900 °F) hat.

4. Prozess nach Anspruch 1, wobei das Abgasbrenner-Gas eine Temperatur von 816 °C bis 1649 °C (1500 °F bis 3000 °F) hat.

5. Prozess nach Anspruch 1, wobei das vorerhitzte Wasser und/oder der Dampf dem Abwärmeboiler aus einem Abwärmeboiler-Vorheizer zugeführt werden.

6. Prozess nach Anspruch 1, wobei der kombinierte Hochdruckdampf zur Energieerzeugung verwendet wird.

## Revendications

1. Procédé de production de vapeur haute pression à partir d'un procédé de fermentation de gaz de synthèse, le procédé comprenant :
la mise en contact de gaz de synthèse chaud quittant un gazéificateur ayant une température supérieure à 760°C (1 400°F) avec du gaz de synthèse refroidi, ayant une température de 177°C (350°F) à 232°C (450°F) et dans lequel le gaz synthèse refroidi recyclé est combiné avec le gaz de synthèse chaud à un rapport de 0,1 à 20, pour produire un gaz de synthèse pré-refroidi ayant une température de 760°C (1 400°F) ou inférieure à une entrée d'une chaudière de récupération ; et
le transfert du gaz de synthèse pré-refroidi dans la chaudière de récupération efficace pour produire de la vapeur haute pression de chaudière de récupération et un gaz de synthèse refroidi, la vapeur haute pression de chaudière de récupération ayant une pression de 345 kPag à 6,55 MPag (50 psig à 950 psig),
dans lequel un fermenteur reçoit du gaz de synthèse refroidi qui n'est pas recyclé,
le procédé comprenant de plus le transfert de gaz de synthèse appauvri, dans lequel le gaz de synthèse appauvri présente un rapport CO/CO₂ inférieur à 1,0, du fermenteur vers un brûleur de gaz d'évacuation efficace pour produire du gaz de brûleur de gaz d'évacuation chaud ;
le transfert du gaz de brûleur de gaz d'évacuation chaud vers un surchauffeur de chaudière de gaz d'évacuation efficace pour produire de la vapeur haute pression de chaudière de gaz d'évacuation, dans lequel la vapeur haute pression de chaudière de gaz d'évacuation présente une pression de 4,14 MPag à 6,55 MPag (600 psig à 950 psig) ; et
la combinaison de la vapeur haute pression de chaudière de récupération et de vapeur haute pression de chaudière de gaz d'évacuation pour former une vapeur haute pression combinée, dans lequel la vapeur haute pression combinée présente une pression de 4,14 MPag à 6,55 MPag (600 psig à 950 psig).

2. Procédé selon la revendication 1, dans lequel le gaz de synthèse pré-refroidi présente une température de 316°C (600°F) à 760°C (1 400°F).

3. Procédé selon la revendication 2, dans lequel le gaz de synthèse pré-refroidi présente une température de 316°C (600°F) à 482°C (900°F).

4. Procédé selon la revendication 1, dans lequel le gaz de brûleur de gaz d'évacuation présente une température de 816°C à 1 649°C (1 500°F à 3 000°F).

5. Procédé selon la revendication 1, dans lequel de l'eau et/ou de la vapeur préchauffée est introduite dans la chaudière de récupération à partir d'un préchauffeur de chaudière de récupération.

6. Procédé selon la revendication 1, dans lequel la vapeur haute pression combinée est utilisée pour la production d'énergie.
